# EUROPEAN PATENT APPLICATION

(11) **EP 1 481 982 A1**
(43) Date of publication of application: **01.12.2004**
(21) Application number: 03737457.6
(22) Date of filing: 03.02.2003
(51) Int. Cl.: C07F 15/02, C01G 49/08, H01F 1/37

(54) **ORGANIC SUBSTANCE HAVING FERRITE BONDED THERETO AND PROCESS FOR PRODUCING THE SAME**

(30) Priority: 04.02.2002 JP 2002027156
(71) Applicant: The Circle for the Promotion of Science and Engineering, Tokyo 152-8550 (JP)
(72) Inventor: HANDA, Hiroshi, Setagaya-ku, Tokyo 156-0045 (JP); ABE, Masanori, Ota-ku, Tokyo 145-0073 (JP); HASEGAWA, Makoto, Yamato-shi, Kanagawa 242-0007 (JP)
(74) Representative: Richardson, Mark Jonathan
(86) International application number: PCT/JP2003/001050
(87) International publication number: WO 2003/066644

(57) **Abstract**

A ferrite bonded organic substance having that has a strong bond between organic substance and ferrite can be obtained by carrying out formation and bonding of a ferrite to an organic substance having a functional group selected from a carboxyl group, a mercapto group and a mercapto group in oxidized form. In the producing method of manufacturing the ferrite bonded organic substance, ferrite plating can be employed. Wide application in, for example, various drugs, bio-analytical reagents, DNA, various contrast media and MRI sensitizers that permit magnetic manipulation can be realized by bonding ferrite to organic substance retaining a bio-active substance.

## Description

### TECHNICAL FIELD

This invention relates to a ferrite bonded organic substance having strong bond between a ferrite and an organic substance through a functional group of the organic substance and a method for producing the ferrite bonded organic substance.

### BACKGROUND ART

Ferrites, oxide magnetic materials having iron as its constituent component, are commonly found in nature, for example, as magnetite in some living bodies. Ferrites are also artificially synthesized and mass-produced with finely controlled composition and magnetic property and widely used as component materials for devices of information electronics.

An organic substance can be made possible to manipulate magnetically by bonding the substance with a ferrite. Ferrite bonded organic substances that can magnetically manipulate have been actively studied in many fields such as biotechnology and clinical medicine. Non-patent document 1, for example, carries many papers of clinical study results on magnetically manipulated drugs and bio-analytical reagents in which organic substances are bonded with ferrite materials.

These papers discuss about capability of organic substances bonded on microscopic ferrite sphere surfaces, for carrying bio-materials or drugs to a diseased part by using magnetic manipulations, for demarcating enzyme immunity reagents promptly by using magnetic separation procedure, and so on.

For bonding organic substances with ferrites, bonding methods using various bonding agents have been mainly used. When we use a method of forming ferrites directly on nonmagnetic substances without placing bonding materials, we can obtain direct tight bond between organic compounds and ferrites.

Ferrite plating, invented by one of the inventors of this invention, M. Abe and'his co-worker, is regarded as a suitable method for realizing this purpose. The detailed explanation of the ferrite plating is found, for example in non-patent document 2. The ferrite plating has an excellent feature that the plating can be performed keeping pH values of the plating solution at around neutral values. The inventors of the present invention, M. Abe and H. Handa, proposed a ferrite bonded organic materials and their producing method in patent document 1, in which ferrites are bonded by the ferrite plating on organic materials at portions where biological activity of the organic materials does not loose.

Ferrite plating has been used for forming ferrites on surfaces of substrates having many hydroxyl (-OH) groups. It has been known that strong bonding between a ferrite and a substrate can be obtained for the substrates having many hydroxyl groups like metal oxides.

Organic compounds, however, do not always have sufficient number of hydroxyl groups on their surfaces, and in many cases, hydroxyl groups on their surfaces are limited. Furthermore, even if an organic compound has hydroxyl groups on its surfaces, the hydroxyl groups do not always form strong bond between ferrites and the organic substances similar to the metal oxide hydroxyl groups. Therefore, it is desired to find out a new ferrite plating method in which strong bonding between the organic compounds and ferrites can be formed.

This invention is a result of many efforts by the present inventors to solve this problem. The inventors found out a new condition to obtain strong bonding between organic substances and ferrites, and after further studies, they could attain this invention. This invention provides ferrite bonded organic substances in which ferrites have strong bond with the organic substances and a method for manufacturing the ferrite bonded organic substances.

An invention of super-paramagnetic fine particles having surface stabilizing organic compound coating, contrary to bonding ferrites to organic compounds, is described in patent document 2. Similarly, surface stabilized ferromagnetic metal fine particles covered with organic compounds like 2-hydroxy nicotinic acid are described in patent document 3. The organic compound coatings on already formed inorganic particles, however, cannot have strong bonding between the inorganic particles and the organic substances at levels obtained by ferrite plating. We can give the following reasons for the bonding differences. When inorganic particles are in a step of forming, constituent atoms are activated to form strong chemical bonding with other materials. After the inorganic particles were formed, on the other hand, the constituent atoms are already stabilized and cannot form strong coupling based on such chemical bonding.
Patent Document 1: Japanese Patent Laid-open Application 2002-131320
Patent Document 2: Japanese Patent Laid-Open Application 2000-507197
Patent Document 3: Japanese Patent Laid-open Application 6-180838
Non-patent Document 1: Scientific and Clinical Application of magnetic carriers, Prenum Press, New York (1997)
Non-patent Document 2: Masanori Abe, Journal of Magnetic Society of Japan, Vol.22 1225-1232 (1998)

### SUMMARY OF THE INVENTION

The ferrite bonded organic substance according to the present invention is characterized by comprising an organic substance having functional groups selected from carboxyl group (-COOH group), a mercapto group (-SH group) and a mercapto group in oxidized form (-SO₂ geroup, -SO₃ group, -S-S- group and so on), and a ferrite bonded to the organic substance through the functional group. The organic substance has a strong chemical bonding with the ferrite through the functional group of the organic substance.

The ferrite bonded organic substance according to the present invention is desireble to be manufactured by forming the ferrite under the existence of an organic compound, since the ferrite and the organic substance are bonded by a strong chemical bond. The bonding between the ferrite and the organic substance is formed strong enough when chemical reaction between the functional group of the organic substance and the ferrite occurs at an initial stage of ferrite formation.

The method of producing the ferrite bonded organic substance according to the present invention is characterized by comprising a process for forming and bonding with a ferrite on an organic substance in a solution of the organic substance. Strong bonding between the ferrite and the organic substance can be obtained by producing ferrite bonded organic substances according to the producing method.

### BRIEF DESCRIPTION OF THE DRAWING

Figure 1 is a flow chart showing an embodiment of producing ferrite bonded organic substance according to this invention.
Figure 2 is a schematically shown cross section of an embodiment apparatus for producing the ferrite bonded organic substance according to this invention.
Figure 3 is a graph showing the amount of aspartic acid fixed to ferrite as a function of the input amount of the acid.
Figure 4 is a graph showing the amount of peptide fixed to ferrite as a function of the input amount of the peptide.
Figure 5 is a schematic figure of transmission electron microscope for an aspartic acid fixed ferrite particle.

### BEST MODE FOR CARRYING OUT THE INVENTION

The ferrite bonded organic substances according to the present invention are composites of a ferrite and an organic substance bonded through functional group selected from carboxyl group, a mercapto group and a mercapto group in oxidized form of the organic substance.

To obtain strong bonding between the ferrite and the organic substance, the molecular mass of the organic substance per unit functional group is desirable to be less than 500, and is more desirable to be less than 200.

In order to obtain a strong bonding between the ferrte and the organic substance of the ferrite bonded organic substance according to the present invention, the ferrite is favorable to form chemical bond between the ferrite and the functional group of the organic substance under the existence of the organic substances. For example, the ferrite particles are favorable to form chemical bonds with functional groups of the organic substance in a solution containing the organic substance.

The ferrite plating method described later in detail is especially suitable as a method for forming chemical bond between a ferrite and a functional group of an organic substance in. the organic substance water solution. Actually, strong chemical bonds between ferrites and organic substances are found in the ferrite bonded organic substances that are manufactured using ferrite plating.

Magnetite can be used as a ferrite for composing the ferrite bonded organic substance. The ferrite can comprise Zn as the constituent element. Furthermore, the ferrite can comprise Co and Ni and other metal elements.

Magnetite is suitable for constructing the ferrite bonded organic substances, and moreover, magnetite has an advantage of having relatively large magnetization. The ferrite can comprise Zn for further increasing magnetization and enhancing response sensitivity to magnetic field. The ferrite can also comprise Co, Ni and other metal elements for adjusting magnetic properties and structure.

The organic substance for constructing the ferrite bonded organic substance according to the present invention is desirable to comprise further, at a short distance from the functional group and cooperatively working with the functional group, an additional functional group, selected from carboxyl group, hydroxyl group (-OH group) and carbamoyl group (-CONH₂ group).

As a result of the co-operative work of the neighboring plural number of functional groups of the organic substance, a strong bond between an organic substance and a ferrite can be obtained.

As an organic substance bonding to a ferrite according to this invention, we can give phthalic acid 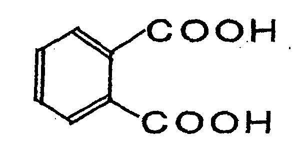 isophthalic acid 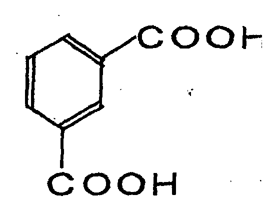 and terephthalic acid.

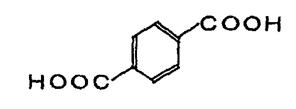

As another organic substances bonding to a ferrite according to this invention, we can give succinic acid 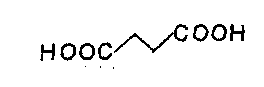 gultaric acid 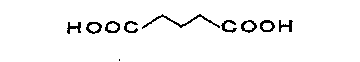 adipic acid 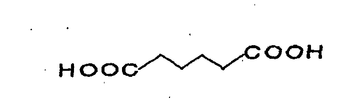 and pimelic acid.

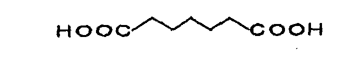

As unsaturated organic acids having double bond, we can give fumaric acid 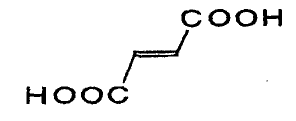 and maleic acid 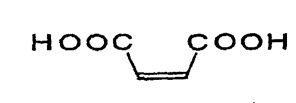 as organic substances bonded to ferrites according to this invention.

As organic substances having both mercapto group and amino group bonding to ferrite according to the present invention, we can give 2-mercapto amine 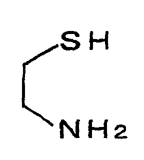 and 6-amine hexane thiol.

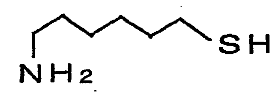

Furthermore, as organic substances having both mercapto group and carboxyl group, 2-mercapto-propionic acid can be used.

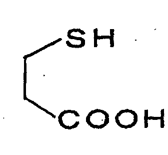

The organic substances bonded to ferrite according to this invention are desirable to have a hydrophilic atomic group in addition to the functional group mentioned above. The hydrophilic atomic group helps the bonding formation between the ferrite and the organic substance and makes the bond strong and stable.

As the organic substances having the hydrophilic functional group, we can give, for example, amino acids and their relating substances. That is to say aspartic acid (Asp) 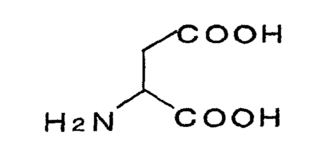 and glutamic acid (Glu).

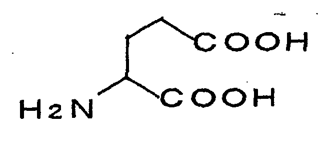

As organic substances that are able to have bond with a ferrite for this invention, we can use amino acids having carbamoyl group in addition to amino group and carboxyl group. These are asparagine 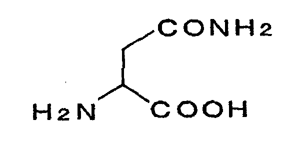 and grutamine.

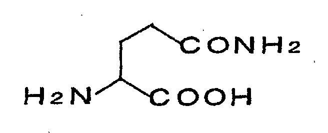

. Malic acid in which an amino group of aspartic acid is replaced by a carboxyl group 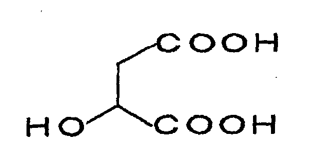 can be used as organic substances bonded to ferrite according to this invention.

In addition, oxalo-acetic acid in which >CH-NH₂ of aspartic acid is replaced by >C=O 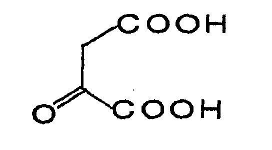 and 2-keto-glutaric acid in which >CH- NH₂ of glutamic acid is replaced by >C=O

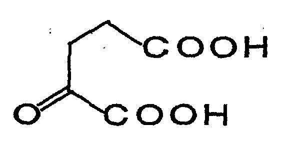

As amino acids having a hydroxyl group in addition to the amino group and the carboxyl group, serine 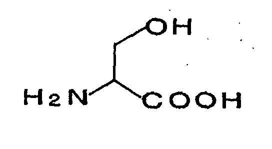 and threonine 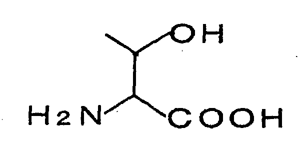 can be used as organic substances bonding to ferrite according to this invention.

As organic substances bonding to ferrite according to this invention, amino acid having mercapto group, cysteine (Cys) 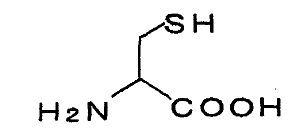 can be used as organic substances bonded with ferrite according to this invention.

Cysteine turns to cysteine sulfinic acid by oxidation 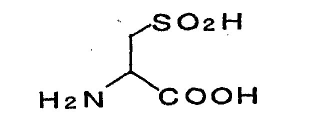 and then further turns to cysteic acid. These compounds can form bondings with ferrites, and be used as organic substances bonded to ferrites according to this invention.

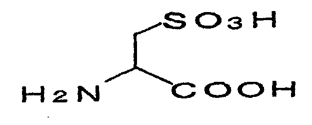

Cystine, consisting of two cysteine molecules bonded through a disulfide bond, can be used as organic substances of the ferrite bonded organic substances according to this invention.

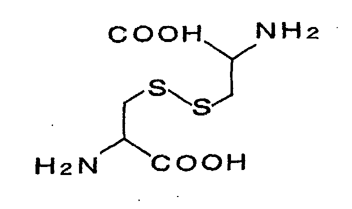

N-acetyl cysteine, a derivatives of systeine, 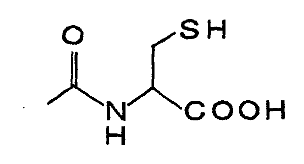 and cysteine ethyl ester 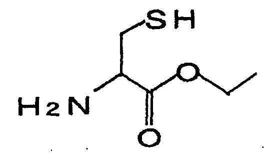 can be used as organic substances of the ferrite bonded organic substances according to this invention.

In these compounds, hydrophilic atomic groups -NH-(amide bond) and -(CO)O-(carboxyl bond) are thought to be related to the formation of bonding with a ferrite surface.

As a ferrite bonded organic substance according to this invention, dithiothreitol having two mercapto groups in a molecule 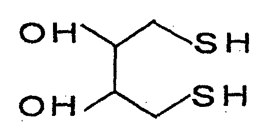 can be used. The two mercapto groups and hydrophilic hydroxyl groups of the dithiothreitol molecule contribute to the formation of good bonding with a ferrite.

The organic substances described above are examples of the organic substances for this invention. The organic substances available in this invention are not limited to the examples shown here. Organic substances in which the carboxyl group of organic substances available in the present invention can be replaced for example by thiocarboxyl group -COSH, dimercaptosuccinic acid HSOCH₂C H₂OSH, and organic substances in which the carboxyl group of the organic substances available in this invention replaced by dithiocarboxyl group are available.

The organic substances shown above have low molecular weight of 500 or less, and most of them have molecular weight of 200 or less. These low molecular weight organic substances have advantages for forming enough bond with ferrite, and for obtaining fine particles and maintaining the fine particles and so on.

The organic substances that form the ferrite bonded organic substances according to the present invention are desirable to have functional groups which can form bonding with other organic substances in addition to the functional groups for bonding with ferrite. These organic substances can connect the organic substances to other organic substances.

Monomers of an organic substance having functional groups for polymerizing monomers other than the functional groups for bonding with ferrites can be favorably used. Amino acids can form peptide bonds between amino group and carboxyl group. Aspartic acids having further carboxyl group and cysteine having mercapto group other than the amino group and carboxyl group are monomers satisfying these requirements.

Functional groups of the ferrite bonded organic substances for bonding organic substances are not limited to the amino group and carboxyl group. Various other functional groups, fitted to form bonding with functional groups of the organic substances including vinyl groups, can be used for this purpose.

An organic substance constructing the ferrite bonded organic substance can comprise an organic material having bond with a ferrite, and a polymer coat substance forming coat and having a bond with the organic material. When the ferrite bonded organic substances are used in a living body, a polymer coat substance suitable for the living body can be selected. The coating of the coat substance can be formed by coating monomer reactive to the ferrite bonded organic substance, and then polymerizing the monomer to form polymer coat. Moreover, the coated substance can be formed directly to the ferrite bonded organic substance.

The organic substance surface coated structure for ferrites decreases cohesive force between ferrites. The ferrite bonded organic substance can also have a structure comprising organic substance fine particle core and ferrite coating. In this structure, fine organic particles having ferrite-like surface characteristics can be obtained.

As the organic substances of the ferrite bonded organic substance according to the present invention, we can use polymers. The ferrite bonded organic substance of this invention can comprise polymer organic substance having a plural number of functional groups selected from carboxyl group, mercapto group, and mercapto group in oxidized form, and a ferrite bonded with the organic substance through the plural number of the functional groups.

As organic substances of the ferrite bonded organic substance according to this invention, we can give polypeptides formed by polymerizing various kinds of amino acids.

Peptides of various amino acids having functional groups carrying capability of forming bond with ferrite, including a peptide of polymerizing aspartic acid and alanine 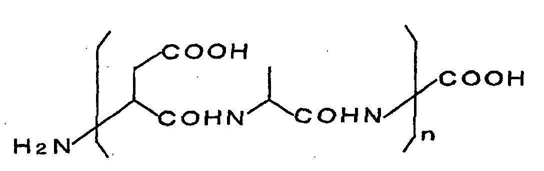 and a peptide of polymerizing aspartic acid, alanine and serine 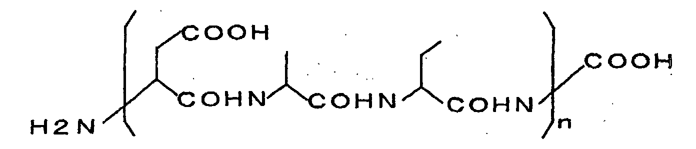 can be used as polymer of the ferrite bonded organic substance according to the present invention.

The peptides having these amino acids can easily form bond with ferrites by using ferrite plating. In the peptides having these amino acids, the hydrophilic atomic group -CONH-(peptide bond) works effectively for the bonding formation with the ferrite, in addition to the hydrophilic side chain functional group like carboxyl group.

The peptides as polymers for the ferrite bonded organic substances include artificially synthesized peptides and naturally produced peptides, for example, polyglutamine acid 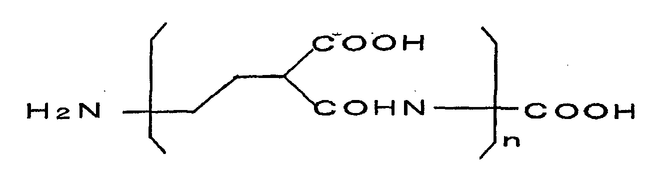 can be used.

Quantity and content of side chain hydrophilic atomic groups in these peptides can be chosen appropriately according to the required degree of bonding with the ferrite.

The organic compounds having peptide bond according to the present invention can be a protein carrying functional groups having capability of forming bond with a ferrite. By using the ferrite plating, a strong bond between the protein and the ferrite due to tight bonding of the functional groups with the ferrite.

The organic compound for the ferrite bonded organic substance can be complex protein including a sugar bonded protein carrying functional groups that can form bond with a ferrite, other than a simple protein. The complex protein can form bond with the ferrite through the constituent protein of the complex protein. DNA (deoxyribonucleic acid) or RNA (deoxyribonucleic acid) having magnetic response capability can be obtained by bonding an artificially synthesized peptide to the DNA or RNA, and bonding the peptide to a ferrite.

The organic substance bonded to a ferrite in the present invention can be a bonded composite of peptide nucleic acid (PNA) and ferrite. The PNA is a synthesized peptide following a DNA and carries functions similar to the function of the DNA.

Protein as organic compound for the ferrite bonded organic substance according to the present invention can be biological fiber protein with functional groups that can form bond with a ferrite. Keratin of wool containing cysteine and grutamine relatively large quantity can form bonding with ferrite through these amino acid components. As organic compound for the ferrite bonded organic substance according to the present invention, proteins for transportation, proteins for immunity, and enzyme carrying functional groups having capability of forming bond with ferrite can be used.

An embodiment of the present invention described later showed that the organic compound having neighboring two carboxyl groups can form bonding with ferrite more easily compared with organic compound having hydroxyl groups. This result suggests that ferrite can be bonded to an enzyme through the mercapto group or carboxyl group of the enzyme without spoiling active centers of the enzyme at hydroxyl groups.

Polymers polymerized by ester bonding can be used as the organic compound constructing the ferrite bonded organic substance according to the present invention. In ester bond carrying polymers, the ester bonds are hydrophilic and work cooperatively with the mercapto group or the carboxyl group for effectively forming bonding between the polymers and ferrites.

Various polymer organic compounds having mercapto group, oxidized form of mercapto group, and carboxyl group in addition to the peptides and polyesters described above can be used.

We found that polyacrylic acid 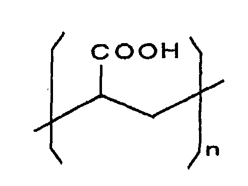 having carboxyl group at high density could easily form bonding with ferrite.

The polyacrylic acid can be used as supplementary coating material for the ferrite bonded organic substance in addition to an organic substance of the ferrite bonded organic substance.

Widely used various polymer materials become available as organic compounds for the ferrite bonded organic substance by giving functional groups like carboxyl group, mercapto group, hydroxyl group, and so on to the polymers. Commonly used polymers produced from monomers do not have such functional groups, though monomers functional groups such as polyester and polyamide before polymerization. These polymers become available as organic materials to bind to the ferrite substance because they possess functional groups like carboxyl group, mercapto group, hydroxyl group and so on. The quantity of the functional groups giving to the polymers can control by degree of bonding between the polymer and the ferrite.

Biologically active materials having above functional groups can be bonded can be used as organic material to bind to the ferrite substance. Furthermore, biologically active material can be bonded to organic compounds for the ferrite bonded organic substance. When the ferrite bonded organic substances are covered with polymer coating, functional substances can be bonded to the polymer coating.

Here, the biologically active materials show activity in biological circumstance. For example, the biologically active materials are various drugs for magnetic DDS (drug delivery system), bio analytical reagents, DNA's, and proteins. Furthermore, materials for contrast medium and intensifier for increasing contrast of MRI image can be given. These materials are manipulated magnetically due to bonding with ferrites.

Manufacturing method of the ferrite bonded organic substance according to the present invention comprises a process that ferrite was synthesized in a soluttion or water of hydration involving an organic compound having functional group chosen from mercapto group, oxidized forms of mercapto group, and carboxyl. When the ferrite is formed under the existence of the organic material, the functional group of the organic compound is chemically bound to the ferrite at the initial stage of ferrite formation. Then, compared with the bonds by conventional methods, more strong and more stable bonds between ferrite and organic compound can be formed.

As a method for forming a ferrite on organic compound, ferrite plating is a suitable method for directly bonding organic material, and strong bonding between them can be obtained by this method.

Using the ferrite plating, ferrite-fixed on organic compounds can be obtained by using water solution or water containing organic compound hydration, water solution of metal ions containing Fe²⁺ ions as an essential ingredient, alkaline solution for controlling pH, and an oxidizing agent for oxidizing Fe²⁺ ions to Fe³⁺ ions.

For the oxidation of Fe²⁺ ions, a method of blowing oxygen gas into the water solution, or incorporating oxygen gas in air into the water solution can be used, but other methods of adding oxidizing agent, for example, sodium nitrite (NaNO₂) or diluted hydrogen peroxide also can be used.

For controlling pH change of the water solution containing organic material into a requested range, pH buffers, for example, ammonium acetate, potassium acetate, or mixture of ammonium acetate and ammonium hydrate can be used.

The ferrite formation reaction can be accelerated by adding Fe³⁺ ions into the metal ion solution containing Fe²⁺ ions as essential ingredient.

The ferrite plating process according to the present invention is performed, for example, as follows. 1) When reaction liquid including divalent iron ions (Fe²⁺ ions) is added to water solution or water of organic compound hydration containing organic material carrying functional groups mentioned above, the metal ions including Fe²⁺ ions are absorbed to the functional groups and hydrogen ions (H⁺ ions) are released. 2) Then, part of the absorbed Fe²⁺ ions are oxidized to Fe³⁺ ions by oxidation reaction caused by using oxygen gas (O₂) or sodium nitrite (NaNO₂), and formation of ferrite layers having spinel structure occurs. 3) Metal ions including Fe²⁺ ions are absorbed to the layer and H⁺ ions are released. Again, part of the absorbed Fe²⁺ ions are oxidized to produce Fe³⁺ ions by oxidation reaction and reactions forming ferrite layers occurs again. The process is repeated and the ferrite (magnetite) layer grows. In this process, various ferrite materials can be manufactured by replacing Fe²⁺ ions by other metal Mⁿ⁺ ions, for example, Co²⁺ ions, Zn²⁺ ions, Ni²⁺ ions or Zn²⁺ ions.

Previous works for ferrite plating was performed predominantly on material surface having hydroxyl groups. Ferrite plating under an existence of carboxyl group was performed by one of the present inventors. In the work, ferrite plating was carried out by using hydroxyl (-OH) groups in monomolecular film of arachic acid CH₃(CH₂)₁₈COOH expanded on water surface. Ferrite plating on materials having carboxyl groups, however, was not known so much as ferrite coating on materials carrying hydroxyl groups in which much knowledge has been accumulated. Since the -OH in carboxyl group -COOH is placed adjacent to -CO-, the character is largely different from/ordinary hydroxyl group. As a result of the present invention, applicability of ferrite plating method is not limited to materials having many hydroxyl groups, but is extended to organic materials having carboxyl groups, mercapto groups and the relating functional groups. Moreover, strong bonding between ferrite and organic materials is obtained by using the ferrite plating.

The ferrite plating has the following advantages. 1) Ferrite formation reaction can be performed at near neutral pH range of 8 to 10. 2) The ferrite can be formed at temperature range of 3 to 30°C including room temperature. 3) Oxidation reaction of Fe²⁺ ions to Fe³⁺ ions in open-air oxidation is available. To obtain ferrite formation reaction by slower oxidation condition, non-open system can be applied using NaNO₂ or diluted hydrogen peroxide solution as oxidizing agent. By using ferrite plating, we can obtain ferrite directly bonded to organic materials under the moderate forming condition.

Next, an embodiment of the present invention will be described more concretely using figures.

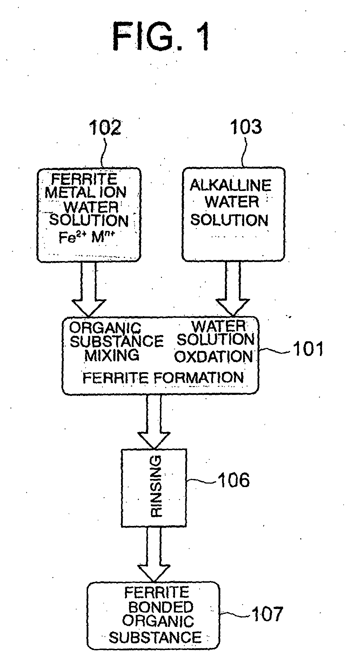

Figure 1 shows a flow chart of an embodiment for manufacturing a ferrite bonded organic substance. In Fig. 1, metal ion solution 102 containing Fe²⁺ as essential ingredient is mixed to water solution 101 that added organic material carrying functional groups having capability of forming bond to ferrite to buffer solution due to pH stabilization, and then the metal ions are absorbed to the organic material. In response to the addition of the metal ion solution 102, alkaline solution 103 of ammonium hydro-oxide, for example, is simultaneously added to keep pH value of the solution in a range between 8 and 10. Ferrite is formed with oxidization of Fe²⁺ ions by stirring the solution or blowing air to the solution. After washing with water at rinsing process 106, ferrite bonded organic substance 107 is obtained.

According to the process for bonding ferrite on organic materials, the temperature of water solution 101 in the process can be kept to low temperature of 4°C, for example to save loss of biological activity.

The application of the ferrite bonded organic substance according to the present invention will be described. Various applications are possible for the ferrite bonded organic substance according to the present invention, since ferrite is bonded directly and strongly with organic materials and then, the substance can be manipulated magnetically.

Making use of strong bonding between ferrites and organic materials, the ferrite bonded organic substances can be used for various ferrite particle dispersion systems coated ferrite particles with organic materials.

The ferrite bonded organic substances in the present invention can be used as carriers for affinity chromatography, bonding ligands which show specific adsorption characteristics of enzyme, some protein, peptide, drug, DNA and so on to the substances. Direct bonding between the ligands and ferrite can be obtained and can be used as carriers for affinity chromatography by giving functional group for forming bond of ferrite to the ligands. The separation of the carrier can be performed in a very short time since these carriers have magnetization due to the ferrite bonding and magnetic separation procedure is applicable. Furthermore, the carriers fabricated using the ferrite bonded organic substance carries advantages of having strong bond without using bonding agent and capability of making the small size of the carrier.

Using chemical materials like drugs and endocrine disturbing chemicals as ligands, the ferrite bonded organic substance carrier according to the present invention can identify chemical materials such as drugs and endocrine disturbing chemical materials having specific adsorption characteristics to the ligands.

The ferrite bonded organic substance according to the present invention can be used as media for drug delivery and media for magnetic separation. Drug and endocrine disturbing chemicals are generally combined with proteins and exist as proteins. The acceptors exhibiting specific adsorption are also proteins. According to the present invention, strong ferrite - binding of drug with protein can use magnetic manipulation such as magnetic drug guidance. Since the ferrite and the protein are strongly bonded to the protein, we need not be anxious about occurring separation of the ferrite from the organic material at the manipulation process.

The ferrite bonded organic substance in the present invention can be used as an intensifier for increasing contrast of MRI image, and heating material of thermal medical treatment for local and selective induction heating using high frequency AC field.

According to the present invention, fiber or resin having magnetization can be obtained, when the ferrite bonded organic substance binding with ferrite is fiber or resin and they have at least one selected from mercapto group, oxidized form of mercapto group, and carboxyl group. The fiber or resin can be either artificially synthesized or formed by living body, such as wool in which keratin containing cysteine as constructing component. The fiber or resin can be conductive and avoid charge up by choosing conductive ferrite material such as magnetite.

Magnetic particles showing decreased cohesion force between particles due to steric hindrance can be obtained by the ferrite bonded organic substance in this invention. As the organic material, linear organic material having hydrophilic functional group at least one selected from mercapto group, oxidized form of mercapto group, and carboxyl group at one side, and hydrophobic functional groups such as alkyl group at the other side is chosen for this purpose. Then ferrite particles are bonded to the linear organic material having at least one selected from mercapto group, oxidized form of mercapto group, and carboxyl group, and the ferrite particles are covered with the organic material. These particles can be used as oily magnetic colloid particles, particles for magnetic toner, and magnetic particles used for magnetic recording media and so on. When ferrite particles are bonded and covered with organic materials having hydrophilic end, cohesion force between particles is decreased due to steric hindrance and magnetic particles showing stable dispersion characteristics in water can be obtained, and can be widely used as hydrophilic magnetic colloid.

The size of the ferrite in the present invention is not limited, but can be chosen widely depending upon its purpose. When functional groups mentioned above are given to a protein such as an antibody in living body, for example, the size of ferrite can be chosen in a range of 1/10 to 10 times as large as the size of the antibody protein to keep handling easy. In order to avoid cohesion and decrease cohesive force due to the remanent magnetization of ferrite, the size of ferrite is desirable to be 100nm or less, and further desirable to be 10 nm or less to obtain superparamagnetic behavior. To retain magnetization of the particles, on the other hand, the size is desirable to be 5nm or more.

The ferrite bonded organic substance of the present invention can bond fluorescent materials. Then the location of a ferrite bonded organic substance can be made clear by using the fluorescent.

### (Example 1) Bonding between ferrite and monomer organic materials

Water solution containing Fe²⁺and Fe³⁺ ions with pH value of 2 was prepared mixing 0.1 mol/L FeCl₂ water solution and 0.1 mol/L FeCl₃ water solution.

0.01 weight % ammonium water solution was prepared diluting 28 weight % ammonium water solution with water.

Then, amino acid solution was prepared by mixing 1 mmol/L aspartic acid water solution with 1 mol/L NH₄OH and NH₄Cl buffer solution by adjusting pH value from 8.4 to 10.

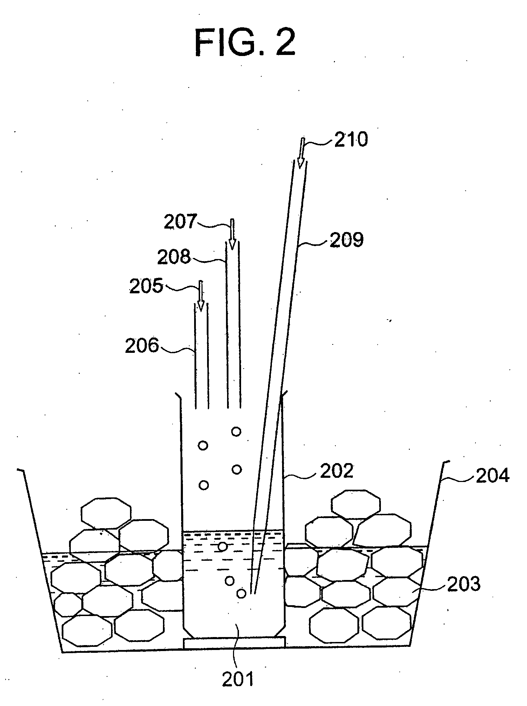

As shown in Fig. 2, 100 µL of the aspartic acid water solution 201 in a vessel 202 was placed in an ice container 204, and the prepared water solution containing Fe²⁺and Fe³⁺ 205, and 0.01 weight % ammonium water solution 207, of 50 µL each were dropped slowly into the vessel through the pipe 206 and the pipe 208, respectively, and mixed as blowing air through a pipet 209.

After the reaction time of two hours, the products were rinsed repeatedly by using magnetic separation, and then aspartic acid bonded ferrite (magnetite) particles were obtained. In this procedure, centrifugal separation procedure can also be applied for removing water.

Quantitative analysis of the aspartic acid bonded ferrite particle product was performed to obtain quantity of bonded aspartic acid. Ferrite component of the product was resolved by hydrochloric acid, and then the iron ions were precipitated by alkalizing the solution.

After the water solution containing aspartic acid was dried in a test tube, they treated and in hydrochloride vapor for 16 hours at 110°C in Waters Co pico tag work station accessory reaction vial. After the reaction due to the treatment, 0.1 mL of water and 0,01 mL of triethylamine were added in the test tube. After removing precipitates, the supernatant fluid was dried and a derivative was obtained using phenylisothiocyanate and obeying a protocol by Wako Chemical Co. The derivative was separated by Waters Co. 600 type HPLC (high performance liquid chromatography) pump system equipped with HPLC column (Wako pack WS-PTC column), and detected by measuring 254 nm light absorption using Waters Co. 996 type photodiode array detector.

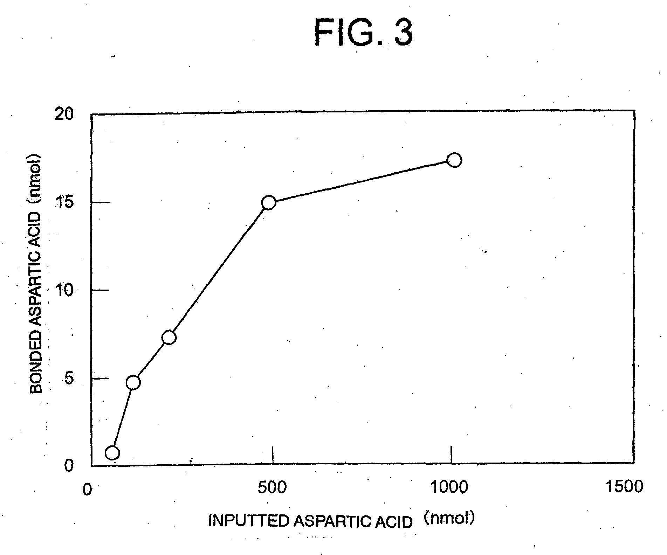

Figure 3 shows the result obtained for the relation between the quantity of inputted aspartic acid and the quantity of bonded aspartic acid.

Amounts of bonded aspartic acid for the aspartic acid bonded ferrite particles were analyzed after repeating rinsing by cation type, anion type, and nonion type surfactant water solutions by using the procedure mentioned above. The result means that the quantity of aspartic acid bonded to the ferrite particles did not change by the rinsing. This result showed that the bonding between ferrite particles and aspartic acid does not break by these surfactants and stable enough to these surfactants.

As seen from Fig. 3, when the pH value of aspartic acid water solution was controlled to 8.4, the quantity of aspartic acid fixed to the ferrite particles was 3.8 nmol. When the pH value of aspartic acid water solution was controlled to 10.0, the quantity of aspartic acid fixed to the ferrite particles was decreased to 0.3 nmol.

The quantities of organic materials fixed to the ferrite particles were examined for other 20 organic materials using the same procedure for the aspartic acid. The results are shown in Table 1.

**Table 1**

| Organic Material | Quantity of Fixed Organic material (Fixed/Input) |
|---|---|
| Dithiothereitol | 35 nmol/mg |
| 2-Mercapto-prrropionic acid | 3.8 nmol/mg |
| Cystein (Cys) | 10.3 nmol/mg |
| N-Acetyl cysteine | (equal to cysteine) |
| Cysteine ethyl ester | (equal to cysteine) |
| 2-Mercapto amine | (equal to cysteine) |
| 6-Amine hexane thiol | 2.1 nmol/mg |
| Cystein (Cys)₂ | 8.3 nmol/mg |
| Cysteine acid | 3.0 nmol/mg |
| Phthalic acid | 0.05 nmol/mg |
| Isophthalic acid | 0.03 nmol/mg |
| Terephthalic acid | 0.03 nmol/mg |
| Aspartic acid (Asp) | 9.5 nmol/mg |
| Glutamic acid (Glu) | 2.3 nmol/mg |
| Malic acid | 30.5 nmol/mg |
| Oxaloacetic acid | 15 nmol/mg |
| 2-Keto-glutaric acid | 8.0 nmol/mg |
| Serine (Ser) | 3.8 nmol/mg |
| Threonine (Thr) | 0.5 nmol/mg |
| Asparagine (Asn) | 1 nmol/mg |
| Glutamine (Gln) | 0.5 nmol/mg |

The crystalline component of the obtained fine particles was identified by X-ray diffraction analysis. The diffraction signal obtained from the fine particles bonded to aspartic acid showed that the fine particles are single crystals of Fe₃O₄-γ-Fe₂O₃ solid solution. The fine particles bonded to cysteine showed red color, and the red color was increased with increasing the cysteine content. X-ray analysis for these particles showed that the red color was caused by an appearance of α-FeOOH.

Saturation magnetization measurement for these particles showed that the saturation magnetization of the cysteine bonded particles decreased with increasing cysteine content reflecting the increase of nonmagnetic α-FeOOH. For aspartic acid bonded fine particles, on the other hand, the decrease of saturation magnetization did not appear. These saturation magnetization measurement results were consistent with the X-ray diffraction results.

The aspartic acid bonded ferrite fine particles were dried, shaped to a target by a press, and served for surface analysis by laser dissociation ionization weight-spectrometer. The difference spectrum for aspartic acid bonded ferrites and non-bonded ferrites, a signal for molecular weight 99.9 corresponding to FeCOO⁺ was obtained. This molecule was produced as a result of dissociation of carboxyl groups sited to iron atoms. The existence of the signal strongly suggests an existence of direct bonding between a carboxyl group and an iron atom of the ferrite particles.

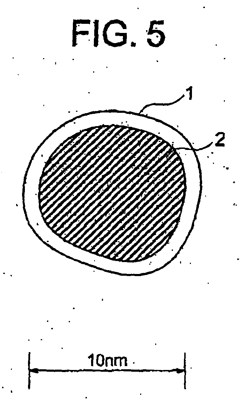

A transmission electron microscope observation of the aspartic acid bonded ferrite particles described above was performed. Figure 5 shows a schematic figure for a transmission electron microscope observation image of the particles. As shown in Fig. 5, it was found that a ferrite particle 1 was covered with an aspartic acid layer 2 bonded with the ferrite particles.

The aspartic acid bonded ferrite particles and the cysteine bonded ferrite particles were immersed in a water solution containing 1 mol/L of sodium chloride, 8 mol/L of urea, 4 mol/L of guanidine, and 1% sodium lauryl sulfate for 10 minutes, and then rinsed sufficiently with water. No significant difference between the quantity of aspartic acid and cysteine content for the samples before and after the treatment was found. This result shows that the bondings of these particles are stable against the treatment. Since sodium chloride works for cutting ionic bonding, urea/ guanidine works for cutting hydrogen bond and lauryl sulfate strongly affects hydrophobic interactions, the result means that the bonding between ferrite and the organic materials are chemically stable and firm.

### (Comparative Example 1) Other amino acids

We tried to form bonding between other amino acids and ferrite using same procedure as described in Example 1. As the results, amino acids could not be detected from samples tried to bond glycine (Gly), alanine (Ala), hitidine (His), methionine (Met), phenylalanine (Phe), tyrosine (Tyr), leucine (Leu), isoleucine (Ile), arginine (Arg), and lysine (Lys).

### (Example 2) Bonding between ferrite and peptides

The following 3 types of peptides were synthesized by peptide polymerization of amino acids.
1) Asp-Ala-Asp-Ala-Asp-Ala-Asp-Ala
2) Asp-Ala-Asp-Ala
3) Asp-Ala-Ser-Ala-Asp-Ala-Ser-Ala
4) Asp-Ala-Ser-Ala

Syntheses of these peptides were performed by solid phase synthesis using conventional procedure applying Fmoc group as protective group for protecting amino group. Protective groups of these polypeptides were removed by using reaction reagent containing trifluoroacetic acid as predominant ingredient and refined their purity up to 99 % by reversed phase HPLC. The obtained peptides were confirmed by measuring their precise weight using weight spectrometer that these peptides were the objective peptides.

To these peptides, ferrite (magnetite) particles were formed in the peptide solutions using the same procedure described in Example 1, and the peptide bonded ferrite particles were obtained.

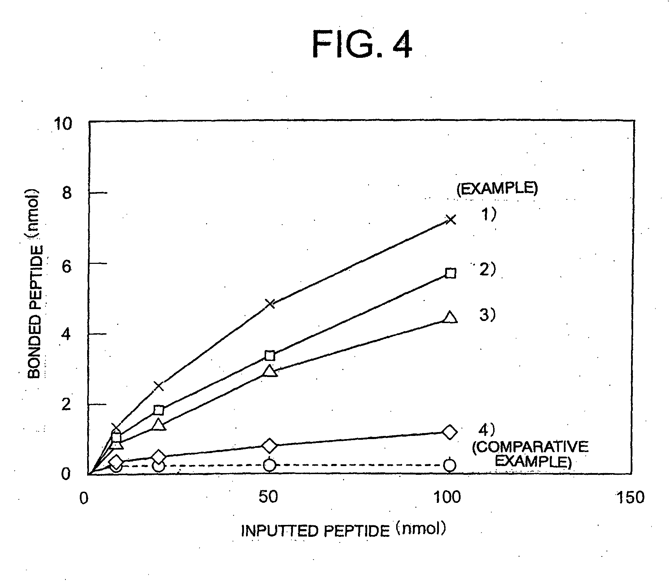

Quantitative analyses of peptides were performed for the ferrite bonded ferrite particles using same procedure as described in Example 1. Figure 4 shows the results. From Fig. 4, it was found that peptides containing more aspartic acid component were bonded more to the ferrite particles. In these peptides, the strong bonding with ferrites seems to be obtained by remaining carboxyl groups of aspartic acid components locating in a short distance apart and working cooperatively.

### (Comparative Example 2) Other peptide

The peptide the following structure was synthesized.

1) Gly-Gly-Gly-Gly
We tried to form bonding between the peptides and ferrites using same procedure as described in Example 2. Quantitative analysis of the peptides was performed for the ferrite particles. As the result, peptides bonded to ferrite particles were not detected for this case in which peptide consisted uniformly of glycine.

### (Example 3) Bonding between ferrite and polyacrylic acid

Ferrite formation using plating was performed for 0.1mL water solution containing 0.01 to 0.1 weight % polyacrylic acid with average molecular weight of 2, 000 and pH 8. 4 buffer solution under the same condition as Example 1.

Water soluble carbodiimide and N-hydroxysuccinimide were added and reacted to the ferrite bonded polyacrylic acid product, and then peptide (Gly-Gly-Gly-Gly) was added and reacted to the carboxyl group of the polyacrylic acid product. After rinsing with distilled water. The product was then hydrolyzed by hydrochloride, and amino acid was quantitatively analyzed by the analyzing method of amino acids. As the result, the quantity of glycine corresponding to the quantity bonded to the polyacrylic acid was detected, and quantity of polyacrylic acid bonded to the ferrite was quantitatively analyzed.

From this result, we obtained 2.5 nmol for detected quantity of glycine produced in 0.017 weight % polyacrylic acid solution, and 3.2 nmol for detected quantity of glycine produced in 0.03 weight % polyacrylic acid solution, compared with detected glycine quantity of 0.6 nmol for solution without containing polyacrylic acid.

Visual 400 nm light absorption change for laying water suspension of polyacrylic acid bonded ferrite particles in this example for a long time was examined. Since the light absorption was mot changed, it was shown that sedimentation caused by aggregation did not occur.

### (Example 4) Ferrite bonded antitumor substance methotrexate

Ferrite bonded antitumor substance methotre (MTX) shown below were bonded and a bonded substance were obtained using the same process as described in Example 3. The MTX has the structure of glutamic acid having two carboxyl groups at on end. Tight bonding to ferrite seems to be due to a cooperative working of the two carboxyl groups in a short distance.

Reversed phase HPLC analysis and weight spectrometer analysis of dissolved acid were performed. As the result, a peak due to Fe3+ regarded as came from dissolved ferrite and a peak that was in agreement with molecular weight of MTX.

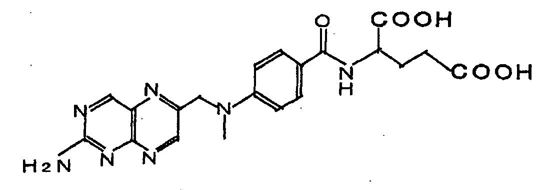

The quantitative analysis result showed that the quantity of MTX bonded to MTX was 6.4 nmol/mg corresponding to 2.9 µg/mg.

In this way, drugs and other functional substances can be bonded through organic materials bonded to ferrites.

### INDUSTRIAL AVAILABILITY

According to the present invention, organic materials and ferrite can be bonded strongly. This bonding can be used for strongly bonding ferrite and functional substances like drugs, reagents including reagents for diagnosis. The bonding between organic substance and ferrite is easily obtained by using ferrite plating. The obtained ferrite bonded organic substances can be widely used, for example, as various drugs for magnetic delivery systems, magnetically separable ingredients for living body analysis, magnetic DNA tips and protein tips, magnetic contrast media and MRI image intensifier, since the obtained ferrite bonded organic substances are magnetic and can manipulate magnetically.

## Claims

1. A ferrite bonded organic substance, comprising:
an organic substance having a functional selected from carboxyl group, a mercapto group and a mercapto group in oxidized form; and
a ferrite bonded to the organic substance through the functional group.

2. The ferrite bonded organic substance according to claim 1, wherein the ferrite is formed under the existence of the organic substance and chemically bonded to the functional group.

3. The ferrite bonded organic substance according to claim 2, wherein the organic substance further comprises, at a short distance from the functional group and cooperatively working with the functional group, an additional functional group selected from carboxyl group, hydroxyl group and carbamoyl group.

4. The ferrite bonded organic substance according to claim 2, wherein the organic substance further comprises a hydrophilic atomic group.

5. The ferrite bonded organic substance according to claim 2, wherein the organic substance comprises an organic material bonded to ferrite and an organic covering substance covering and bonded to the organic material.

6. The ferrite bonded organic substance according to claim 2, wherein the organic substance has low molecular weight of 500 or less.

7. The ferrite bonded organic substance according to claim 2, wherein the organic substance is a polymer.

8. The ferrite bonded organic substance according to claim 2, wherein the organic substance is a biologically active material bonded with the functional group.

9. The ferrite bonded organic substance according to claim 1, wherein the organic substance of the ferrite bonded organic substance has biologically active material bonded to the organic substance.

10. The method of producing ferrite bonded organic substance comprising a process for forming ferrite on an organic substance in a solution of the organic substance.

11. The method of producing ferrite bonded organic substance according to claim 10, wherein the ferrite formation and bonding with an organic substance is performed by adding metal ion solution containing Fe²⁺ ions as an essential ingredient, alkaline solution for controlling pH, and an oxidizing agent for oxidizing Fe²⁺ ions to Fe³⁺ ions, to water solution or water of organic compound hydration water.

12. The method of producing ferrite bonded organic substance according to claim 11, wherein hydrogen peroxide is used as the oxidizing agent for oxidizing Fe²⁺ ions.
